# EUROPEAN PATENT SPECIFICATION

(11) **EP 0 571 694 B1**
(45) Date of publication and mention of the grant of the patent: **06.12.1995**
(21) Application number: 92830268.6
(22) Date of filing: 27.05.1992
(51) Int. Cl.: G06F 7/50

(54) **Fast adder chain**
Schnelle Addierkette
Chaîne additionneuse rapide

(43) Date of publication of application: 01.12.1993
(73) Proprietor: SGS-THOMSON MICROELECTRONICS s.r.l., 20041 Agrate Brianza (Milano) (IT)
(72) Inventor: Golla, Carla, I-20099 Sesto san Giovanni, Milano (IT); Sali, Mauro, I-20079 Sant'Angelo Lodigiano, Milano (IT)
(74) Representative: Checcacci, Giorgio

(56) References cited:
- EP-A- 0 391 516
- EP-A- 0 571 693
- IEE PROCEEDINGS G. ELECTRONIC CIRCUITS & SYSTEMS vol. 133, no. 5, October 1986, STEVENAGE GB pages 256 - 264 H. YUNG ET AL. 'Recursive addition and its parameterisation in VLSI'
- PROCEEDINGS OF THE 1990 IEEE INTERNATIONAL SYMPOSIUM ON CIRCUITS AND SYSTEMS, 1-3 MAY 1990, NEW ORLEANS, LA, USA. vol. 2, IEEE, NEW YORK USA. pages 982 - 986 T. NOLL 'Carry-Save Arithmetic for High-Speed Digital Signal Processing.'
- IEEE JOURNAL OF SOLID-STATE CIRCUITS. vol. 23, no. 2, April 1988, NEW YORK US pages 573 - 580 C. EKROOT 'A GaAs 4-bit Adder-Accumulator Circuit for Direct Digital Synthesis'

## Description

This invention relates to a fast adder chain.

More particularly, the invention concerns an adder chain being operative to add together a plurality N of digital words (X,Y, Z...) of n bits, N being an integer greater than 2, and comprising a plurality of cascading adder blocks (2) including an intial block (4) receiving the first two digital words (X, Y) and a final block (5) presenting the sum of all the words.

As is well known, adder chains are used in a variety of circuit arrangements designed to meet a range of different applicational demands.

A typical example of their usability is related to FIR Finite Impulse Response filters, wherein the adders are adapted to implement part of the transfer function which is characteristic of the filter.

A number of proposals have been known in the art which are directed to provide adder chains. Such prior proposals are beset, however, with a common drawback in that they are all quite slow in yielding the result of the sum operation.

A first prior art solution is disclosed in the European patent application No. 0 391 516 which relates to a binary adding apparatus useful to add together two digital words.

This solution however doesn't teach any mechanism for receiving a third word of fourth word and efficiently combining all these words.

A second prior art solution is disclosed in the IBM Technical Disclosure Bulletin Vol 17, no. 1, June 1974, at pages 118-119 which relates to a high-speed accumulator for minimizing the carry delay time by using three input full adders and an arrangement for carry propagation.

This solution may be useful to add a limited number of words because with an increasing number of words to be added a lot of time is lost in the carry propagation into the output stage.

Some of these prior approaches have been described in detail in Joseph Cavanagh's "Digital Computer Arithmetics", published by McGraw-Hill.

For completeness of discussion, briefly reviewed herein below are the most commonly adopted solutions to the problem of providing N-bit parallel adders for two's complement, fixed point numbers.

A first adder is known as the Carry Look-Ahead type and effective to simultaneously input carries to each block at the location of each bit. The carries are generated from three count levels, whereas the sum is obtained from two levels.

It follows that the maximum propagation delay will be equal to five clock impulses. However, the final carry requires a logic AND gate with N+1 inputs, which can only be implemented by a network of cascade-connnected gates.

It can be appreciated that this involves additional delay in the signal propagation.

Another adder, known as the Carry Select type, has a structure whereby the operands are divided into groups, and each group is implemented using the same logic as in the first adder above.

This second adder is not so fast, and requires a highly complex circuitry.

A third prior approach, referred to as the Carry By-Pass, tries to reduce the time required to generate the sum by speeding up the carry determining operation for the carry to be input to a given cell. For this purpose, an overriding step is provided for the carry to override one chain stage when either operand has already a logic value of one at said given location.

While performing better than the previously described arrangement, the attainable rate is not a significantly fast one.

A further typology of adders is that known in the art as Carry Save Adder or pseudoadder, and comprises a combinatorial network which, when input three numbers of N bits each, will output two more N-bit numbers referred to as the pseudosum and pseudocarry.

This prior adder requires, however, a final stage to add the pseudosum and pseudocarry together, with the pseudocarry suitably shifted one position.

In summary, all of the state-of-art proposals have the disadvantage of being quite slow in performing the sum operation despite the different forms in which they have been embodied. Further, they imply considerable circuit complexity, which increases considerably the integrated circuit area that must be devoted to the sum operation.

The underlying technical problem of this invention is to provide an adder chain which has such structural and functional characteristics as to allow the sum operation to be performed at a very fast rate, and with reduced silicon area requirements, thereby overcoming the limitations of current like arrangements.

A related European patent publication EP-A- 0571693 filed on the same day by the applicant proposes an alternative solution to the above technical problem with a different circuit structure comprising cascaded adder blocks.

The solutive idea on which this invention stands consists in propagating the carry only once to the end of the adder chain.

Based on this solutive idea, the technical problem is solved by an adder chain as defined in the characterizing portion of Claim 1.

Other features and the advantages of an adder chain according to the invention will become apparent from the following detailed description of an embodiment thereof, given by way of non-limitative example with reference to the accompanying drawings.

In the drawings:

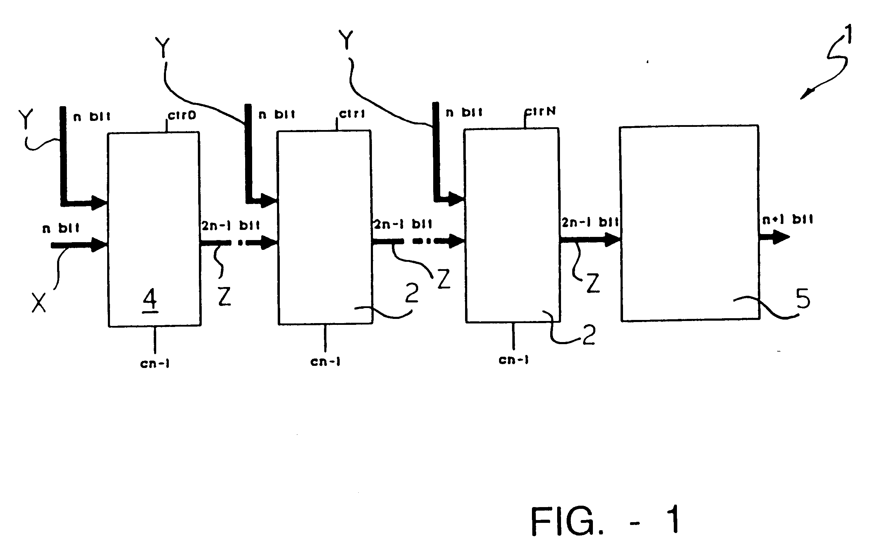

Figure 1 is a diagramatic representation of an adder chain embodying the invention;
Figure 2 shows diagramatically a detail of a first adder or sum block in the chain of Figure 1;
Figure 3 is a diagramatic detail representation of a generic i-th adder or sum block in the chain of Figure 1;
Figures 4 and 5 show respective examples of adders as incorporated to the blocks in Figures 2 and 3;
Figures 6 and 7 show further examples of adders incorporated to the blocks in the chain of this invention; and,
Figure 8 is a diagramatic representation of an end block in the chain of Figure 1.

With reference to the drawing views, generally and schematically shown at 1 is an adder chain embodying this invention.

This chain 1 is particularly, though not solely, intended for incorporation to a digital filter of the FIR type, not shown because known per se.

The chain 1 structure comprises a plurality of N adder or sum blocks 2 centrally therein, which correspond in number to the number of words to be added. Also provided are an initial block 4 and a final block 5 for computing and presenting the sum in explicit form.

The initial block 4 is shown in Figure 2 to comprise a group of adders 7, being each input pairs of words, with each word being composed of two bits.

Specifically, such words are two-bit portions of the digital words to be added together which, in the embodiment being discussed herein by way of illustration only, are composed of n=8 bits each.

Thus, block 4 comprises a number of adders 7 equal to n/2, which are arranged in parallel and provided each with respective input pairs for receiving digital signals corresponding to the aforesaid portions of the words to be added.

Accordingly, each adder 7 is input, on the one side, two digital signals Aᵢ and Aᵢ₊₁ which correspond to two bits of a first digital word X, and on the other side, two more digital signals Bᵢ and Bᵢ₊₁ which correspond to another pair of bits of a second word Y to be added to the first. It should be understood that the bit pairs occupy the same and homolog positions in the respective words X and Y.

The signals related to the second word Y are picked up from a register, indicated at 3. The word X is instead used to allow several digital filters incorporating the chain 1 of this invention to be cascade connected.

The construction of each adder 7 is shown in Figures 4, 5, 6 and 7 to include respective cells wherein the combinations of two full adders FA, or two half adders HA, or even one full adder and one half adder, are proposed.

For example, Figure 4 shows a first type of HA-FA combination which is input two words A0, A1 and B0, B1, each of two bits, and outputs two sums SOM1, SOM2 as well as the carry C2 for a second cell.

Shown in Figure 5 is instead a combination of a full adder being input two words, each of two bits, and a carry CIN0 from a preceding sum, e.g. the carry C2 from the previous case.

A third case shown in Figure 6 proposes the combination of two half adders, with three inputs, a two-bit word, and a carry from a preceding sum. The outputs of this adder would be the equivalent of the previous cases.

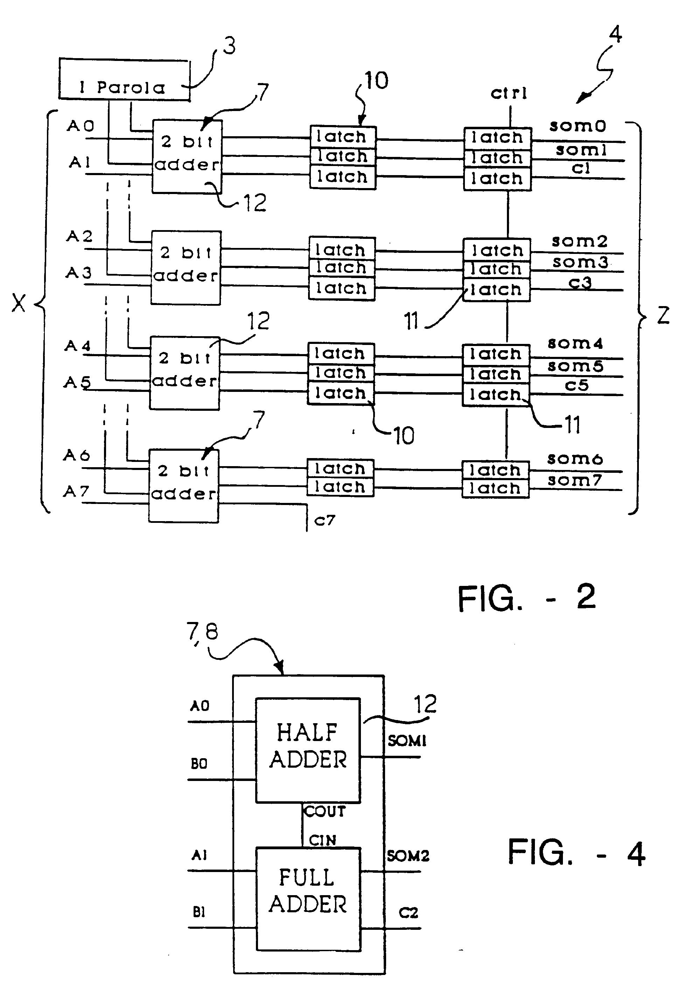

Lastly, the example of Figure 7 shows an FA-HA combination with four inputs, of which three have the same "weight" and one relates to a higher weight carry.

The last-named three cells form essentially a parallel Carry-Ripple adder for two-bit words.

Within each cell, the HA and/or FA adder pairs are interlinked to transfer the carry from the first pseudosum operation performed internally.

Within the chain 1, the above cells are utilized as appropriate and required in the various blocks 2, 4 and 5.

The construction of the initial block 4 further comprises a plurality of storage elements 10, referred to as latches hereinafter.

Specifically, such latches are of the so-called master-slave type and are provided in the number of (3n/2 - 1).

A latch 10 is arranged, in fact, after each output, SOMi or Ci, of the adders 7, excepting the output Cn-1 of the last adder in each block 2 or 4. The last-named output represents the n-th carry and should be cleared for shifting the carry one position, toward the most significant bits, in order for the result to be correct.

A similar group of (3n/2 - 1) latches 11, again of the master-slave type, are provided after the previously mentioned latches 10. These latches 11 are dual selection ones linked operatively to a control signal Ctro, which may allow the signal to override the latch. The latches 11 are provided effectively from special symmetrical F.I.R. filters.

The outputs of latches 11 are denoted in the drawings by the symbols SOMi and Ci, depending on whether they relate to the i-th pseudosum or pseudocarry bit from the operation performed in block 4.

The constructions of the N blocks 2 located centrally in the chain will be now reviewed in detail with reference in particular to Figure 3.

Each i-th block 2 is input, on the one side, a digital word Y of n bits read from the memory 3, and on the other side, the digital output Z from the adder block preceding it. This output Z comprises 2n-1 bits.

The words Y and Z are input, however, as portions made up of two bits each, which are applied to respective two-bit adder blocks 8.

Each block 2 includes a number of adders at least equal to n/2.

The first adder 8 in the i-th block 2 comprises a cell 12 of the kind shown in Figure 4, whereas the other two-bit adders 8 are of the kind indicated at 13 in Figure 5 and also input the carry from the two-bit sum performed in the preceding block 2 at the corresponding location.

Similar to block 4, each block 2 is provided with plural latches 10 placed after each output of the adders 8, excepting for the carry Cn-1 output of the last adder.

Further dual-selection latches 11, linked operatively to a control signal Ctrl, are cascade connected to the former, and their functions will be explained hereinafter.

The construction remains to be described of the final block 5, which is adapted to perform and present on an output U the explicit computation of the sum of the digital words.

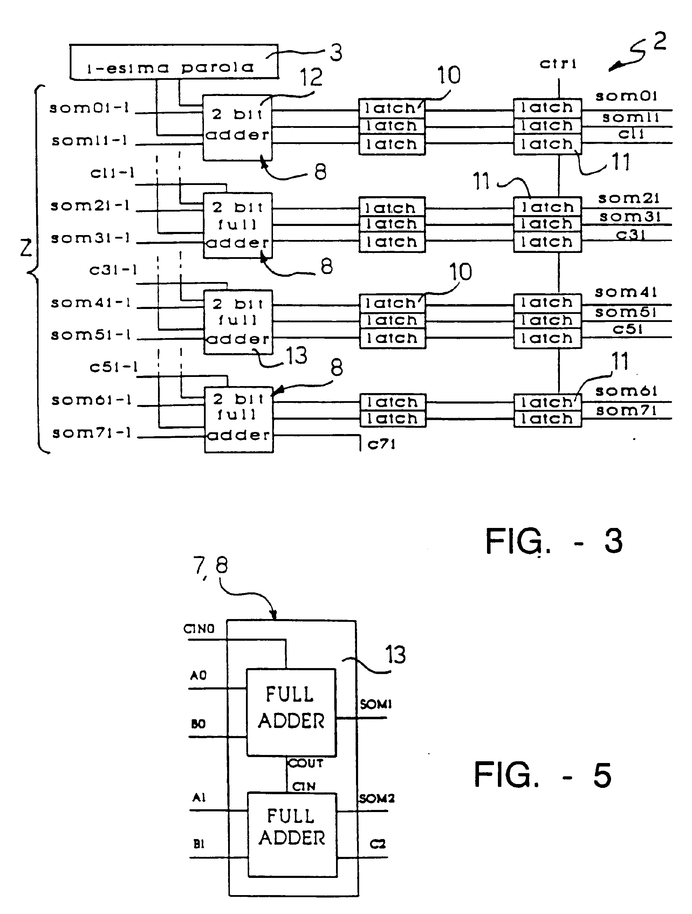

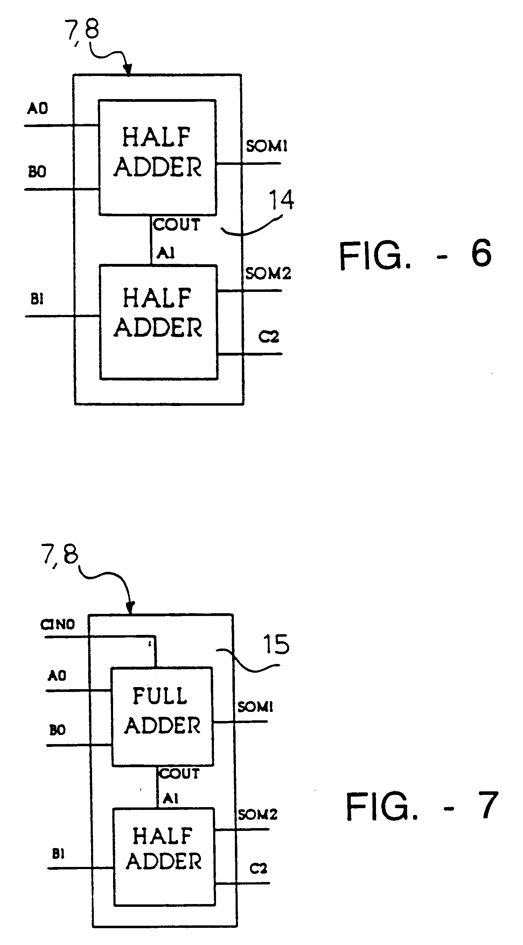

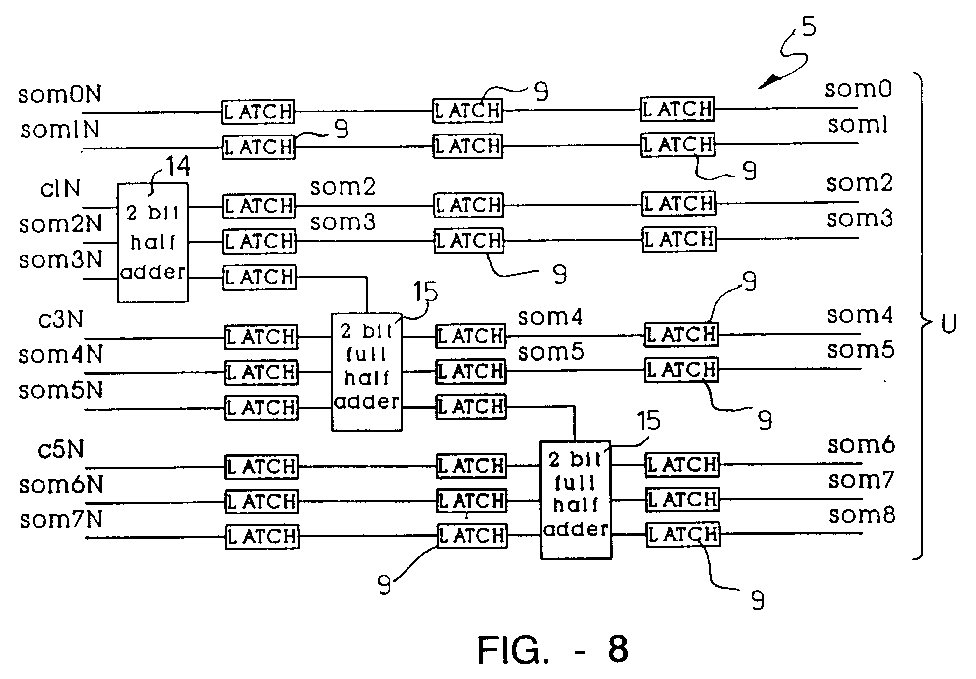

As shown in Figure 8, block 5 basically comprises a plurality of latches 9 orderly arranged in cascade as parallel rows. The number of the rows is essentially of n+1, with some additional and partial rows being provided for storing the various carries.

The first two rows only include latches 9 and carry over on their outputs the values SOM0m, SOM1m of the least significant bits of the pseudosum computed in the last block of the kind indicated at 2.

The second and third rows include instead an adder of the kind indicated at 14 in Figure 6, being input the first and second bits of the second pseudosum as well as the first pseudocarry bit. The two outputs of that adder are connected to two corresponding latches 9 containing the second group of two bits of the result of the sum operation to be carried over on the output U. A third output of adder 14 contains the carry for application to a successive adder of the kind indicated at 15.

From here onwards, the block 5 has paired rows comprising an adder 15 whose location shifts through one place at each successive double row in order to be input the carry that appears on the output of the adder 14 or 15 immediately preceding it.

In essence, the carry is propagated through one place at each clock impulse, and each bit of the final or partial sum and each carry are stored in the master-slave latches 9.

The operation of the adder chain according to the invention will be now described. It will be assumed, of course, that the scan rate for the transitions occurring within the circuit is provided by a clock signal.

A major advantage of the invention is that the carry from an elemental sum operation, that is one performed between two bits only of the words to be added together, is propagated only once through the chain end prior to being output.

The internal logic of the adder blocks 2 uses as data the pseudosum SOMi and pseudocarry Ci between homolog pairs of bits making up each of the words to be added together.

As an example, if the binary number 101011 is to be added to another binary number, 101001, then the result can be set forth as groups of pseudosums, 00-00-00, each associated with a corresponding so-called pseudocarry: 1-1-1. The latter should obviously be shifted one place toward the most significant coding digits or bits.

The generic i-th block 2 will receive groups of two bits composing the words Z and Y to be added together as well as the various pseudocarries from the pseudosums already completed in the preceding block.

The final block 5 is instead relied upon to shift the pseudocarry one place toward the most significant bits of the pseudosum, consistently with the overall circuit timing.

The carry from each elemental sum operation on four bits is propagated at each clock impulse. Each bit of the partial sum and each carry are stored in the master-slave latches 10 and 11.

In some cases, and especially where the chain 1 is used in linear digital filters, the dual selection latches 11 may be overridden on command through the control signal Ctri.

The chain 1 of this invention poses no operational problems to the duty rate because the time required by an adder FA to complete the summing of two bits plus the input carry is about 3-4 nsec, while the time taken by a latch 10 to record the result of the operation is about 3 nsec. Therefore, the overall delay will be 6-7 nsec, i.e. less than one half that required by conventional devices.

In addition, the silicon area requirements of an integrated circuit structure according to the invention will be uniquely smaller.

The adder chain according to the invention has accordingly shown to be particularly adapted to operate at the highest frequencies anticipated of conventional digital filters.

Further, it is comprised of very simple and highly reliable basic components.

## Claims

1. An adder chain being operative to add together a plurality N of digital words (X,Y, Z...) of n bits, N being an integer greater than 2, and comprising a plurality of cascading adder blocks (2) including an initial adder block (4) receiving the first two digital words (X, Y), N-2 intermediate adder blocks (2), each adding a respective one of said digital words with the pseudosums and pseudocarries of the previous adder block in the just adder chain, and a final adder block (5) presenting the sum of all the words, characterized in that each adder block (4, 2), excluding the final adder block (5), includes at least n/2 two-bits carry ripple adders (7, 8) arranged in parallel and provided each with respective input pairs for receiving digital signals corresponding to portions of the words to be added for obtaining pseudosums (SOMi) and pseudocarries (Ci) of said portions of digital words (X,Y), and means (10,11) for storing and transmitting said pseudosums (SOMi) and pseudocarries (Ci) to the subsequent adder block (2) in the adder chain, said final adder block (5) receiving pseudosums and pseudocarries from the last intermediate adder block (2) in the adder chain and including two-bits adders (14, 15) and storage elements (9), for selectively adding pairs of bits other than the least significant two bits.

2. An adder chain according to Claim 1, characterized in that each two bits carry ripple adder (7) includes a cell composed of any possible combination of a half adder (HA) and a full adder (FA).

3. An adder chain according to Claim 2, characterized in that said initial adder block (4) has double storage elements (10,11) cascade connected after each output of said two-bits carry ripple adders.

4. An adder chain according to Claim 1, characterized in that said final adder block (5) receives as inputs respective digital words corresponding to said pseudosums and said pseudocarries and having parallel rows, equal in number to the number of input bits, of storage elements (9) cascade connected with at least one two bits carry ripple adder (14,15) therebetween, with the exception of a first row corresponding to the two bits of the first pseudosum.

5. An adder chain according to Claim 4, characterized in that each two-bits carry ripple adder (14, 15) in the final adder block (5) comprises a cell consisting of a combination of a half adder (HA) and a full adder (FA).

6. An adder chain according to claim 1, characterized in that said storing means includes two sets of storage elements cascade connected to one another and coupled to the two-bits carry ripple adders (7, 8), one of the sets being coupled to a control signal for selective overridding.

7. A digital filter including an adder chain according to claim 1.

## Patentansprüche

1. Addiererkette zum Zusammenaddieren mehrerer N Digitalwörter (X, Y, Z ...) mit n Bits, wobei N eine natürliche Zahl größer als 2 ist, umfassend mehrere kaskadierte Addierblöcke (2) mit einem Anfangsaddierblock (4), der die ersten zwei Digitalwörter (X, Y) empfängt, N-2 Zwischenaddierblöcken (2), die jeweils eines der Digitalwörter mit den Pseudosummen und Pseudoüberträgen des vorhergehenden Addierblocks in der schnellen Addierkette addieren, und einem Endaddierblock (5), der die Summe sämtlicher Wörter präsentiert, **dadurch gekennzeichnet**, daß jeder Addierblock (4, 2) mit Ausnahme des Endaddierblocks (5) mindestens n/2 Zwei-Bit-Carry-Ripple-Addierer (7, 8) enthält, die parallel angeordnet sind und jeweils mit zugehörigen Eingangspaaren zum Empfangen digitaler Signale entsprechend den Abschnitten der zu addierenden Worte ausgestattet sind, um Pseudosummen (SOMi) sowie Pseudoüberträge (Ci) der Abschnitte der digitalen Worte (X, Y) zu erhalten, sowie eine Einrichtung (10, 11) zum Speichern und Übertragen der Pseudosummen (SOMi) und Pseudoüberträge (Ci) zum nachfolgenden Addierblock (2) in der Addierkette aufweist, wobei der Endaddierblock (5) Pseudosummen und Pseudoüberträge von dem letzten Zwischenaddierblock (2) in der Addierkette enthält und Zwei-Bit-Addierer (14, 15) sowie Speicherelemente (9) enthält, um selektiv Paare von Bits mit Ausnahme der niedrigstwertigen beiden Bits zu addieren.

2. Addierkette nach Anspruch 1, **dadurch gekennzeichnet**, daß jeder Zwei-Bit-Carry-Ripple-Addierer (7) eine Zelle enthält, die sich aus jeder möglichen Kombination eines Halbaddierers (HA) und eines Volladdierer (FA) zusammensetzt.

3. Addierkette nach Anspruch 2, **dadurch gekennzeichnet**, daß der Anfangsaddierblock (4) doppelte Speicherelemente (10, 11) aufweist, die hinter jedem Ausgang der Zwei-Bit-Carry-Ripple-Addierer in Kaskade geschaltet sind.

4. Addierkette nach Anspruch 1, **dadurch gekennzeichnet**, daß der Endaddierblock (5) als Eingangsgrößen digitale Wörter empfängt, die den Pseudosummen und den Pseudoüberträgen entsprechen und in ihrer Anzahl der Anzahl von Eingangsbits entsprechende parallele Reihen von Speicherelementen (9) aufweisen, die mit mindestens einem Zwei-Bit-Carry-Ripple-Addierer (14, 15) dazwischen in Kaskade geschaltet sind, ausgenommen eine erste Reihe entsprechend den zwei Bits der ersten Pseudosumme.

5. Addierkette nach Anspruch 4, **dadurch gekennzeichnet**, daß jeder Zwei-Bit-Carry-Ripple-Addierer (14, 15) in dem Endaddierblock (5) eine Zelle aufweist, die aus einer Kombination eines Halbaddierers (HA) und eines Volladdierers (FA) besteht.

6. Addierkette nach Anspruch 1, **dadurch gekennzeichnet**, daß die Speichereinrichtung zwei Sätze von Speicherelementen enthält, die zueinander in Kaskade geschaltet sind und mit den Zwei-Bit-Carry-Ripple-Addierern (7, 8) gekoppelt sind, wobei einer der Sätze mit einem Steuersignal zum selektiven Überspringen gekoppelt wird.

7. Digitalfilter mit einer Addierkette nach Anspruch 1.

## Revendications

1. Chaîne d'addition servant à additionner une pluralité N de mots numériques (X, Y, Z ...) de n bits, N étant un nombre entier supérieur à 2, et comprenant une pluralité de blocs additionneurs (2), montés en cascade, dont un bloc additionneur initial (4), qui reçoit les deux premiers mots numériques (X, Y), N-2 blocs additionneurs intermédiaires (2), qui additionnent chacun un mot respectif desdits mots numériques aux pseudo-sommes et aux pseudo-retenues du bloc additionneur précédent dans la chaîne d'addition rapide, et un bloc additionneur final (5), qui présente la somme de tous les mots, caractérisée en ce que chaque bloc additionneur (4, 2), à l'exclusion du bloc additionneur final (5), comprend au moins n/2 additionneurs deux bits à retenue en cascade (7, 8), montés en parallèle et pourvus chacun de paires d'entrées respectives pour recevoir des signaux numériques, correspondant à des parties des mots à additionner pour obtenir des pseudo-sommes (SOMi) et des pseudo-retenues (Ci) desdites parties de mots numériques (X, Y) et des moyens (10, 11) pour mémoriser et pour transmettre lesdites pseudo-sommes (SOMi) et lesdites pseudo-retenues (Ci) vers le bloc additionneur (2) suivant dans la chaîne d'addition, ledit bloc additionneur final (5) recevant les pseudo-sommes et les pseudo-retenues du dernier bloc additionneur intermédiaire (2) dans la chaîne d'addition, et comprenant des additionneurs deux bits (14, 15) et des éléments de mémorisation (9), pour additionner sélectivement des paires de bits, autres que les deux bits de poids faible.

2. Chaîne d'addition selon la revendication 1, caractérisée en ce que chaque additionneur deux bits à retenue en cascade (7) comprend une cellule constituée de toutes les combinaisons possibles entre un demi-additionneur (HA) et un additionneur complet (FA).

3. Chaîne d'addition selon la revendication 2, caractérisée en ce que ledit bloc additionneur initial (4) a des éléments de mémorisation doubles (10, 11) montés en cascade après chaque sortie desdits additionneurs deux bits à retenue en cascade.

4. Chaîne d'addition selon la revendication 1, caractérisée en ce que ledit bloc additionneur final (5) reçoit, en tant qu'entrées, les mots numériques respectifs correspondant auxdites pseudo-sommes et auxdites pseudo-retenues, et en ce qu'il présente des rangées parallèles, en nombre égal au nombre de bits d'entrée, d'éléments de mémorisation (9), montés en cascade, avec au moins parmi eux un additionneur deux bits à retenue en cascade (14, 15), à l'exception d'une première rangée correspondant aux deux bits de la première pseudo-somme.

5. Chaîne d'addition selon la revendication 4, caractérisée en ce que chaque additionneur deux bits à retenue en cascade (14, 15) du bloc additionneur final (5) comprend une cellule consistant en une combinaison d'un demi-additionneur (HA) et d'un additionneur complet (FA).

6. Chaîne d'addition selon la revendication 1, caractérisée en ce que ledit moyen de mémorisation comprend deux ensembles d'éléments de mémorisation, reliés en cascade l'un à l'autre et reliés aux additionneurs deux bits à retenue en cascade (7, 8), l'un des ensembles étant relié à un signal de commande pour une priorité sélective.

7. Filtre numérique comprenant une chaîne d'addition selon la revendication 1.
